# EUROPÄISCHE PATENTSCHRIFT

(11) **EP 1 315 012 B1**
(45) Veröffentlichungstag und Bekanntmachung des Hinweises auf die Patenterteilung: **29.11.2006**
(21) Anmeldenummer: 02102510.1
(22) Anmeldetag: 30.10.2002
(51) Int. Cl.: G02B 21/00, G01J 3/04

(54) **Scanmikroskop, Verfahren zur Scanmikroskopie und Bandpassfilter**
Scanning microscope, method of scanning microscopy and band pass filter
Microscope à balayage, méthode de microscopie à balayage et filtre passe-bande

(30) Priorität: 17.11.2001 DE 10156695
(43) Veröffentlichungstag der Anmeldung: 28.05.2003
(73) Patentinhaber: Leica Microsystems CMS GmbH, 35578 Wetzlar (DE)
(72) Erfinder: Engelhardt, Johann, Dr., D-76669 Bad Schönborn (DE)
(74) Vertreter: Reichert, Werner Franz

(56) Entgegenhaltungen:
- WO-A-99/39231
- WO-A-99/42884
- DE-A- 4 330 347
- GB-A- 2 344 014

## Beschreibung

Die Erfindung betrifft einen Bandpassfilter mit Mitteln zum Auswählen einer unteren Grenzwellenlänge, die die obere Grenze eines unteren Sperrbereich definiert und zum Auswählen einer oberen Grenzwellenlänge, die die untere Grenze eines oberen Sperrbereichs definiert, und mit einer ersten und einer zweiten einstellbaren Blende, die Lichtanteile des unteren und des oberen Sperrbereichs des Detektionslichtes blockieren.

Darüber hinaus betrifft die Erfindung ein Verfahren zur Scanmikroskopie, wobei eine Probe mit Beleuchtungslicht einer Lichtquelle beleuchtet wird und das von der Probe ausgehende Detektionslicht räumlich spektral aufgespalten wird.

In der Scanmikroskopie wird eine Probe mit einem Lichtstrahl beleuchtet, um das von der Probe emittierte Reflexions- oder Fluoreszenzlicht zu beobachten. Der Fokus eines Beleuchtungslichtstrahles wird mit Hilfe einer steuerbaren Strahlablenkeinrichtung, im Allgemeinen durch Verkippen zweier Spiegel, in einer Objektebene bewegt, wobei die Ablenkachsen meist senkrecht aufeinander stehen, so daß ein Spiegel in x-, der andere in y-Richtung ablenkt. Die Verkippung der Spiegel wird beispielsweise mit Hilfe von Galvanometer-Stellelementen bewerkstelligt. Die Leistung des vom Objekt kommenden Lichtes wird in Abhängigkeit von der Position des Abtaststrahles gemessen. Üblicherweise werden die Stellelemente mit Sensoren zur Ermittlung der aktuellen Spiegelstellung ausgerüstet.

Speziell in der konfokalen Scanmikroskopie wird ein Objekt mit dem Fokus eines Lichtstrahles in drei Dimensionen abgetastet.

Ein konfokales Rastermikroskop umfasst im allgemeinen eine Lichtquelle, eine Fokussieroptik, mit der das Licht der Quelle auf eine Lochblende - die sog. Anregungsblende - fokussiert wird, einen Strahlteiler, eine Strahlablenkeinrichtung zur Strahlsteuerung, eine Mikroskopoptik, eine Detektionsblende und die Detektoren zum Nachweis des Detektions- bzw. Fluoreszenzlichtes. Das Beleuchtungslicht wird über einen Strahlteiler eingekoppelt. Das vom Objekt kommende Fluoreszenz- oder Reflexionslicht gelangt über die Strahlablenkeinrichtung zurück zum Strahlteiler, passiert diesen, um anschließend auf die Detektionsblende fokussiert zu werden, hinter der sich die Detektoren befinden. Detektionslicht, das nicht direkt aus der Fokusregion stammt, nimmt einen anderen Lichtweg und passiert die Detektionsblende nicht, so dass man eine Punktinformation erhält, die durch sequentielles Abtasten des Objekts zu einem dreidimensionalen Bild führt. Meist wird ein dreidimensionales Bild durch schichtweise Bilddatennahme erzielt, wobei die Bahn des Abtastlichtstrahles auf bzw. in dem Objekt idealer Weise einen Mäander beschreibt. (Abtasten einer Zeile in x-Richtung bei konstanter y-Position, anschließend x-Abtastung anhalten und per y-Verstellung auf die nächste abzutastende Zeile schwenken und dann bei konstanter y-Position diese Zeile in negative x-Richtung abtasten u.s.w.).

Aus der Deutschen Offenlegungsschrift DE 4330347 A1 ist eine Vorrichtung zur Selektion und Detektion mindestens zweier Spektralbereiche eines Lichtstrahls, mit einer Selektionseinrichtung und einer Detektionseinrichtung bekannt. Die Vorrichtung ist zur zuverlässigen gleichzeitigen Selektion und Detektion unterschiedlicher Spektralbereiche bei hoher Ausbeute und bei einfachster Konstruktion derart ausgestaltet, dass die Selektionseinrichtung Mittel zur spektralen Zerlegung des Lichtstrahls und Mittel einerseits zum Ausblenden eines ersten Spektralbereichs und andererseits zur Reflexion zumindest eines Teils des nicht ausgeblendeten Spektralbereichs und die Detektionseinrichtung einen im Strahlengang des ausgeblendeten ersten Spektralbereichs angeordneten ersten Detektor und einen im Strahlengang des reflektierten Spektralbereichs angeordneten zweiten Detektor umfasst. Als Mittel zum Ausblenden eines ersten Spektralbereichs und andererseits zur Reflexion zumindest eines Teils des nicht ausgeblendeten Spektralbereichs ist vorzugsweise eine Spaltblendenvorrichtung mit verspiegelten Blendenbacken vorgesehen. Die Vorrichtung ist insbesondere als Multibanddetektor in einem Scanmikroskop einsetzbar.

Aus der Deutschen Offenlegungsschrift DE 100 06 800 A1 ist eine Vorrichtung zur Selektion und Detektion mindestens eines Spektralbereichs eines spektral aufgefächerten Lichtstrahls, vorzugsweise im Strahlengang eines konfokalen Rastermikroskops bekannt, wobei der aufgefächerte Lichtstrahl in einer Fokallinie fokussierbar ist und zur überlappungsfreien Detektion des spektral aufgefächerten Lichtstrahls der selektierte Spektralbereich bei einer erhöhten Anzahl von Detektoren und einer fehlertoleranten Anordnung dadurch gekennzeichnet ist, dass im aufgefächerten Lichtstrahl ein den Lichtstrahl zu einem Detektor reflektierendes und/oder brechendes optisches Bauteil angeordnet ist, dessen optisch wirksamer Bereich sich entlang der Oberfläche verkleinert oder vergrößert, so dass durch Ausrichtung des Bauteils zur Fokallinie und die sich daraus ergebende Überdeckung von Fokallinie und Oberfläche der zum Detektor gelangende Spektralbereich definierbar ist.

Die Deutsche Offenlegungsschrift 198 35 070 A1 offenbart eine Anordnung zur einstellbaren wellenlängenabhängigen Detektion in einem Fluoreszenzmikroskop, vorzugsweise in einem Laser-Scanning-Mikroskop, bestehend aus mindestens einer im Detektionsstrahlengang angeordneten Kombination aus mindestens einem Kurzpass- und mindestens einem Langpassfilter zur Erzeugung eines einstellbaren Bandpasses, wobei mindestens ein Filter gegen einen anderen Filter anderer Wellenlängencharakteristik auswechselbar und/oder bezüglich seiner Wellenlängencharakteristik einstellbar ist

Die in den DE 4330347 A1 und DE 100 06 800 A1 offenbarten Anordnungen, die auch unter der Bezeichnung Multibanddetektor bekannt sind, sind sehr aufwendig und daher teuer. Sie bieten die Möglichkeit einer Mehrkanaldetektion, die bei vielen Anwendungen nicht notwenig ist.

Die aus der bereits genannten Deutschen Offenlegungsschrift 198 35 070 A1 bekannte Anordnung ist wenig flexibel und umständlich in der Handhabung. Darüber hinaus ist die Bevorratung einer erheblichen Anzahl von Farbfiltern oder dichroitischen Filtern nötig. Es ist nur eine diskrete jedoch keine kontinuierliche Einstellung möglich.

Es ist die Aufgabe der Erfindung einen Bandpassfilter für ein Scanmikroskop anzugeben, der kontinuierlich einstellbar und einfach zu handhaben ist und der die bekannten Schiebeblenden-Anordnungen vereinfacht.

Diese Aufgabe wir durch einen Bandpassfilter gelöst, der dadurch gekennzeichnet ist, dass die erste und die zweite Blende drehbare Exzenter sind.

Außerdem ist es Aufgabe der Erfindung ein Verfahren zur Scanmikroskopie vorzuschlagen, das eine spektral kontinuierlich flexible, probenspezifische und leicht zu handhabende Detektion des von einer Probe ausgehenden Lichtes ermöglicht.

Diese Aufgabe wird durch ein Verfahren gelöst, das durch die folgenden Schritte gekennzeichnet ist:
- Auswählen einer unteren Grenzwellenlänge, die einen unteren Sperrbereich definiert
- Auswählen einer oberen Grenzwellenlänge, die einen oberen Sperrbereichs definiert
- Einstellen des unteren Sperrbereichs mit einer ersten einstellbaren Blende, die die Lichtanteile des unteren Sperrbereichs blockiert,
- Einstellen des oberen Sperrbereichs mit einer zweiten einstellbaren Blende, die Lichtanteile und des oberen Sperrbereichs blockiert, wobei die erste und die zweite Blende drehbare Exzenter sind und
- Detektieren der nicht blockierten Lichtanteile des Detektionslichtes.

In einer bevorzugten Ausgestaltung definiert das Mittel zum räumlich spektralen Aufspalten des Detektionslichtes eine Aufspaltungsebene, wobei die erste und die zweite Blende in der Ebene drehbare Exzenter sind. Die Exzenter haben die Form von Nocken und sind mit mindestens einem Antriebsmittel vorzugsweise mit Schrittmotoren oder Elektromotoren unabhängig voneinander um je eine zur Aufspaltungsebene senkrechte Achse drehbar. Das Antriebsmittel zum Einstellen der ersten und der zweiten Blende kann einen Motor, einen Steppermotor, ein Galvanometer, einen Piezomotor oder ein Galvanometer beinhalten. Zur Steuerung der Antriebsmittel ist eine Steuereinheit vorgesehen, die den vom Benutzer vorgegebene oberen und unteren Sperrbereiche einstellt. In einer anderen Variante ist das gesamte Spektrum bei konstantem spektralem Abstand des oberen und unteren Sperrbereichs, d.h. bei konstanten wirksamen Blendenabstand, kontinuierlich abtastbar. Vorzugsweise sind die Antriebsmittel computergesteuert.

Die erste und die zweite Blende sind drehbare Exzenter. Die Exzenter sind um zur Aufspaltungsebene, die durch das Mittel zum räumlich spektralen Aufspalten des Detektionslichtes definiert ist, parallele Achsen drehbar. Diese Ausführungsform vermeidet ganz besonders gut die Entstehung von Streulicht an den Blenden. Wenn die Drehachsen im wesentlichen parallel zum Detektionslicht verlaufen, also die Nockenscheiben (Exzenter) senkrecht zur Aufspaltungsebene sind, wird das Detektionslicht durch den Exzenter kantig statt streifend begrenzt, was weniger Streulicht erzeugt.

Um eine möglichst scharfe Filterkanten zu erzielen ist ein Fokussiermittel zum Fokussieren des spektral aufgespaltenen Detektionslichtes vorgesehen. Die erste und die zweite Blende sind vorzugsweise in der Fokusebene des Fokussiermittels angeordnet. Das Mittel zum räumlich spektralen Aufspalten beinhaltet vorzugsweise ein Prisma, ein Gitter oder ein Hologramm.

Der obere und untere Sperrbereich wird in einer bevorzugten Ausführungsform vom Benutzer einstellt. Hierzu sind das gesamte Spektrum des Detektionslichtes grafisch, beispielsweise in Form eines farbigen Balkens auf einem Display dargestellt. Innerhalb des Balkens sind als Schieber dargestellte Marken vorgesehen, die mit einem Zeigegerät, beispielsweise einer Computermaus zur Einstellung innerhalb des Balkens verschiebbar sind.

In der Zeichnung ist der Erfindungsgegenstand schematisch dargestellt und wird anhand der Figuren nachfolgend beschrieben, wobei gleich wirkende Elemente mit denselben Bezugszeichen versehen sind. Dabei zeigen:
- Fig. 1: ein erfindungsgemäßes Scanmikroskop,
- Fig. 2: einen erfindungsgemäßen Bandpassfilter,
- Fig. 3: einen Ablaufplan des erfindungsgemäßen Verfahrens und
- Fig.4: einen weiteren Bandpassfilter.

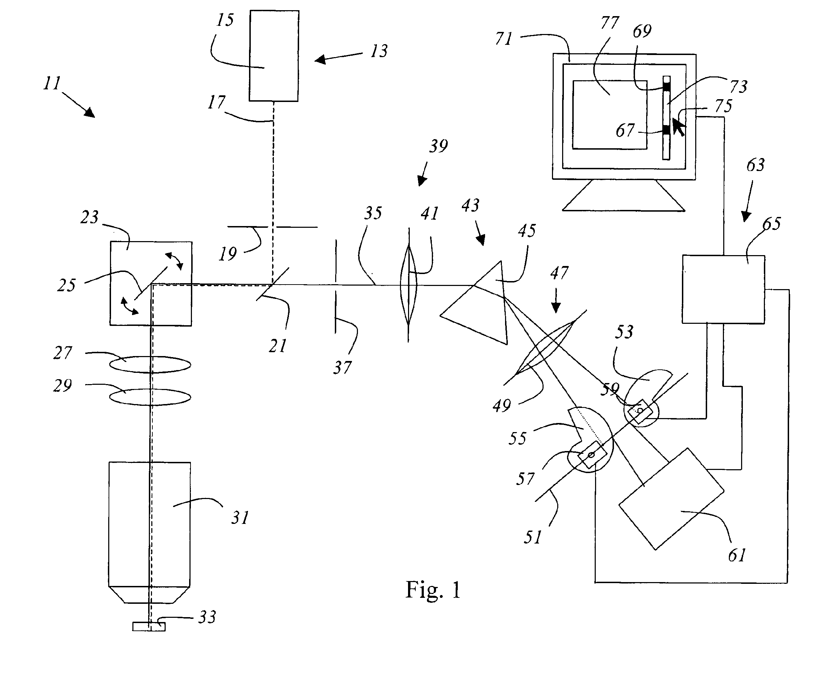

Fig. 1 zeigt schematisch ein konfokales Scanmikroskop 11. Das Scanmikroskop 11 umfasst als Lichtquelle 13 einen Laser 15, der einen Beleuchtungslichtstrahl 17 emittiert. Nach dem Passieren einer Anregungsblende 19 wird der Beleuchtungslichtstrahl 17 von einem Strahlteiler 21 zum Scanmodul 23 reflektiert, das einen kardanisch aufgehängten Scanspiegel 25 beinhaltet, der den Strahl durch eine Scanoptik 27, eine Tubusoptik 29 und eine Mikroskopoptik 31 hindurch über bzw. durch eine Probe 33 führt. Der Beleuchtungslichtstrahl 17 wird bei nicht transparenten Proben 33 über die Probenoberfläche geführt. Bei biologischen Proben 33 (Präparaten) oder transparenten Proben kann der Beleuchtungslichtstrahl 17 durch die Probe 33 geführt werden. Dies bedeutet, dass verschiedene Fokusebenen der Probe nacheinander durch den Beleuchtungslichtstrahl 17 abgetastet werden. Die nachträgliche Zusammensetzung ergibt dann ein dreidimensionales Bild der Probe 33. Der von der Lichtquelle 3 kommende Beleuchtungslichtstrahl 17 ist in der Abbildung als gestrichelte Linie dargestellt. Das von der Probe 33 ausgehende Detektionslicht 35 gelangt durch die Mikroskopoptik 31, die Tubusoptik 29, die Scanoptik 27 und über das Scanmodul 23 zum Strahlteiler 21, passiert diesen und trifft nach dem passieren der Detektionsblende 37 und einem ersten Fokussiermittel 39, das als Linse 41 ausgeführt ist, auf ein Mittel 43 zum räumlich spektralen Aufspalten des Detektionslichtes 35, das als Prisma 45 ausgeführt ist. Das Mittel 43 zum räumlich spektralen Aufspalten des Detektionslichtes 35 definiert eine Aufspaltungsebene, die in der Zeichenebene der Abbildung liegt. Das spektral aufgespaltene Detektionslicht 35 wird mit einem zweiten Fokussiermittel 47, das als Linse 49 ausgestaltet ist, zu einem Linienfokus fokussiert, deren räumliche Lage durch die Linie 51 markiert ist. Im Bereich des Linienfokus sind eine erste Blende 53 und eine zweite Blende 55 drehbar angeordnet, wobei die Drehachsen senkrecht auf der Aufspaltungsebene stehen. Die erste Blende 53 und die zweite Blende 55 sind als Exzenter ausgestaltet. Sie bescheiden das räumlich spektral aufgespaltene Detektionslicht 35 je nach ihrer Drehstellung unterschiedlich. Die erste Blende 53 wird von einem ersten Schrittmotor 57 gedreht. Die erste Blende 55 wird von einem zweiten Schrittmotor 59 gedreht. Das Detektionslicht, das die Blenden 53, 55 passiert gelangt zu einem Detektor 61, der als Photomultiplier ausgeführt ist. Das von der Probe 33 ausgehende Detektionslicht 35 ist in der Abbildung mit ausgezogenen Linien dargestellt. Im Detektor 61 werden elektrische, zur Leistung des von der Probe 33 ausgehenden Detektionslichtes 35 proportionale Detektionssignale erzeugt und an die Verarbeitungseinheit 63, die als PC 65 ausgeführt ist, weitergegeben. Der PC 65 steuert auch den ersten und den zweiten Schrittmotor 57, 59 und stellt über die Stellung der ersten und der zweiten Blende 53, 55 den vom Benutzer vorgegebenen oberen und den ebenso vom Benutzer vorgegebenen unteren Sperrbereich ein. Die Eingabe einer unteren Grenzwellenlänge, die den unteren Sperrbereich definiert, und die Eingabe einer oberen Grenzwellenlänge, die den oberen Sperrbereich definiert, erfolgt mit einer nicht dargestellten Computermaus und dem Mauszeiger 75 durch Verschieben einer ersten Marke 67 und einer zweiten Marke 69 innerhalb eines auf einem Display 71 dargestellten Balkens 73. Die erste Marke 67 repräsentiert dabei die untere Grenzwellenlänge und die zweite Marke 69 repräsentiert die obere Grenzwellenlänge. Auf dem Display ist parallel das Abbild 77 der Probe dargestellt.

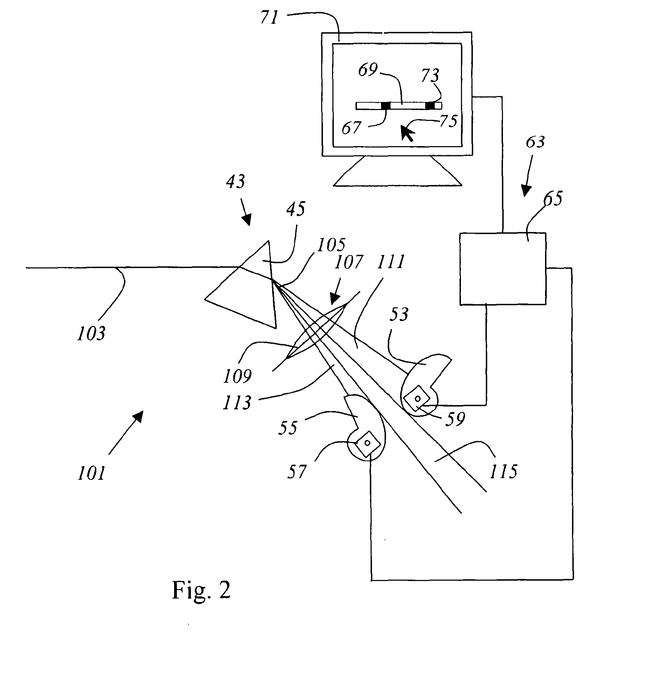

Fig. 2 zeigt einen erfindungsgemäßen Bandpassfilter 101. Der Bandpassfilter 101 beinhaltet ein Mittel zum räumlich spektralen Aufspalten 43, das als Prisma 45 ausgestaltet ist. Ein einfallender Lichtstrahl 103 wird von dem Prisma 45 räumlich spektral zu einem Lichtfächer 105 aufgefächert und anschießend von einem Fokussiermittel 107, die als Sammellinse 109 ausgeführt ist, fokussiert. Der Bandpassfilter 101 beinhaltet als Mittel zum Auswählen einer oberen Grenzwellenlänge einen PC 65 mit einem Display. Die Eingabe einer unteren Grenzwellenlänge, die den unteren Sperrbereich definiert, und die Eingabe einer oberen Grenzwellenlänge, die den oberen Sperrbereich definiert, erfolgt mit einer nicht dargestellten Computermaus und dem Mauszeiger 75 durch Verschieben einer ersten Marke 67 und einer zweiten Marke 69 innerhalb eines auf einem Display 71 dargestellten Balkens 73. Die erste Marke 67 repräsentiert dabei die untere Grenzwellenlänge und die zweite Marke 69 repräsentiert die obere Grenzwellenlänge. Die Eingabe könnte auch direkt durch Angabe der Wellenlängen erfolgen. Der Lichtfächer 105 beinhaltet einen ersten Anteil 111, der im Bereich des oberen Sperrbereichs liegt, einen zweiten Anteil 113, der im Bereich des unteren Sperrbereichs liegt, und einen dritten Anteil 115, der zwischen der ausgewählten oberen und der unteren Grenzwellenlänge liegt. Der erste Anteil 111 wird von einer ersten Blende 53 blockiert; der zweite Anteil von einer zweiten Blende 55. Die erste Blende 53 und die zweite Blende 55 sind als nockenförmige Exzenter ausgestaltet, die in der Auffächerungsebene drehbar angeordnet sind. Die erste Blende 53 wird von einem ersten Schrittmotor 57 gedreht. Die erste Blende 55 wird von einem zweiten Schrittmotor 59 gedreht. Der erste und der zweite Schrittmotor werden von dem PC 65 entsprechend der Eingabe gesteuert. Der dritte Anteil 115 des Lichtfächers 105 wird von der ersten und der zweiten Blende nicht beeinflusst.

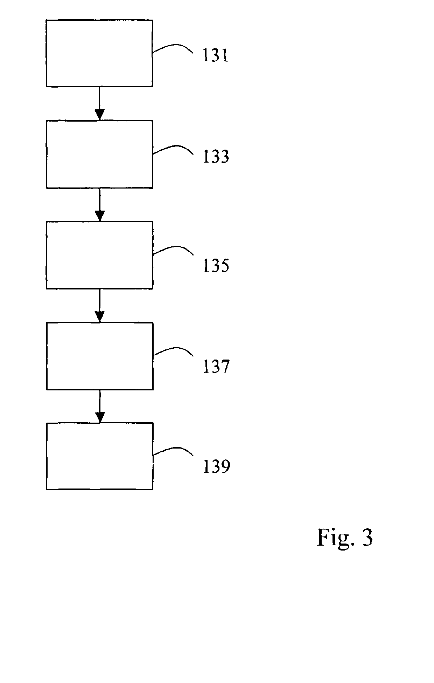

Fig. 3 zeigt einen Ablaufplan eines erfindungsgemäßen Verfahrens, wobei eine Probe mit Beleuchtungslicht einer Lichtquelle beleuchtet wird und das von der Probe ausgehende Detektionslicht räumlich spektral aufgespalten wird. In einem ersten Schritt erfolgt ein Auswählen 131 einer unteren Grenzwellenlänge, die einen unteren Sperrbereich definiert: Vorzugsweise wird die untere Grenzwellenlänge wenige Nanometer oberhalb der Wellenlänge des Beleuchtungslichtstrahle gewählt. In einem weiteren Schritt erfolgt ein Auswählen 133 einer oberen Grenzwellenlänge, die einen oberen Sperrbereichs definiert. Wenn der Beleuchtungslichtstrahl eine weitere Wellenlänge aufweist, ist die obere Grenzwellenlänge vorzugsweise kleiner als diese Wellenlänge zu wählen. Der nächste Schritt beinhaltet ein Einstellen 135 des unteren Sperrbereichs mit einer ersten einstellbaren Blende, die die Lichtanteile des unteren Sperrbereichs blockiert. In weiteren Schritten erfolgt das Einstellen 137 des oberen Sperrbereichs mit einer zweiten einstellbaren Blende, die Lichtanteile und des oberen Sperrbereichs blockiert. Und das Detektieren 139 der nicht blockierten Lichtanteile des Detektionslichtes.

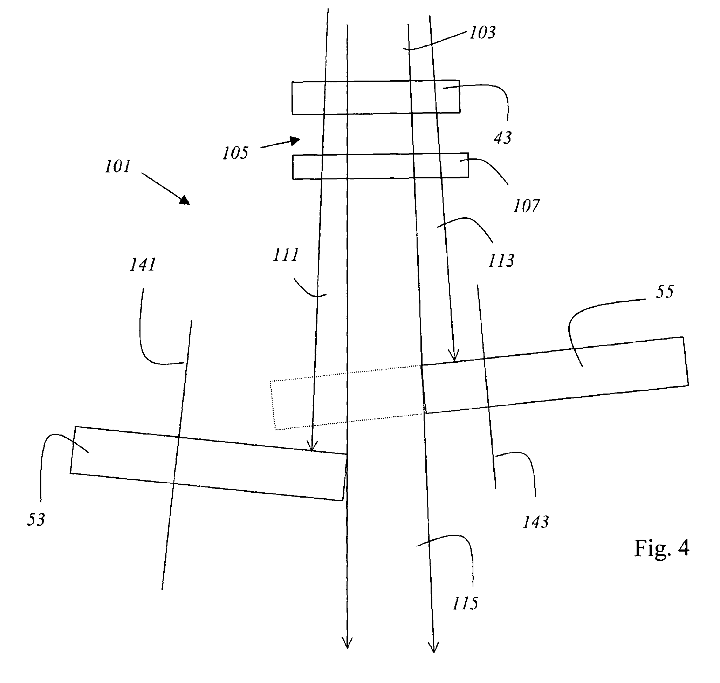

Fig. 4 zeigt einen weiteren Bandpassfilter. Der Bandpassfilter 101 beinhaltet ein Mittel 43 zum räumlich spektralen Aufspalten, das als Gitter ausgestaltet ist. Ein einfallender Lichtstrahl 103 wird von dem Mittel 43 zum räumlich spektralen Aufspalten zu einem Lichtfächer 105 aufgefächert und anschießend von einem Fokussiermittel 107, fokussiert. Der Lichtfächer 105 beinhaltet einen ersten Anteil 111, der im Bereich des oberen Sperrbereichs liegt, einen zweiten Anteil 113, der im Bereich des unteren Sperrbereichs liegt, und einen dritten Anteil 115, der zwischen der ausgewählten oberen und der unteren Grenzwellenlänge liegt. Der erste Anteil 111 wird von einer ersten Blende 53 blockiert; der zweite Anteil von einer zweiten Blende 55. Die erste Blende 53 ist als Exzenterscheibe ausgeführt ist um die erste Achse 141, die in der Auffächerungsebene liegt drehbar. Die zweite Blende 55 ist ebenfalls als Exzenterscheibe ausgeführt ist um die zweite Achse 143, die in der Auffächerungsebene liegt drehbar. Die Blende 53 und die Blende 55 sind leicht versetzt angeordnet, so dass sie nicht kollidieren.

Die Erfindung wurde in Bezug auf eine besondere Ausführungsform beschrieben. Es ist jedoch selbstverständlich, dass Änderungen und Abwandlungen durchgeführt werden können, ohne dabei den Schutzbereich der nachstehenden Ansprüche zu verlassen.

### Bezugszeichenliste:

- 11: Scanmikroskop
- 13: Lichtquelle
- 15: Laser
- 17: Beleuchtungslichtstrahl
- 19: Anregungsblende
- 21: Strahlteiler
- 23: Scanmodul
- 25: Scanspiegel
- 27: Scanoptik
- 29: Tubusoptik
- 31: Mikroskopoptik
- 33: Probe
- 35: Detektionslicht
- 37: Detektionsblende
- 39: erstes Fokussiermittel
- 41: Linse
- 43: Mittel zum räumlich spektralen Aufspalten
- 45: Prisma
- 47: Fokussiermittel
- 49: Linse
- 51: Linie
- 53: erste Blende
- 55: zweite Blende
- 57: erster Schrittmotor
- 61: zweiter Schrittmotor
- 63: Verarbeitungseinheit
- 65: PC
- 67: erste Marke
- 69: zweite Marke
- 71: Display
- 73: Balken
- 75: Mauszeiger
- 77: Abbild
- 101: Bandpassfilter
- 103: einfallender Lichtstrahl
- 105: Lichtfächer
- 107: Fokussiermittel
- 109: Sammellinse
- 111: erster Anteil
- 113: zweiter Anteil
- 115: dritter Anteil
- 131: Auswählen
- 133: Auswählen
- 135: Einstellen
- 137: Einstellen
- 139: Detektieren
- 141: erste Achse
- 143: zweite Achse

## Patentansprüche

1. Bandpassfilter (101) mit Mitteln zum Auswählen einer unteren Grenzwellenlänge, die die obere Grenze eines unteren Sperrbereichs definiert und zum Auswählen einer oberen Grenzwellenlänge, die die untere Grenze eines oberen Sperrbereichs definiert mit einem Mittel (105) zum räumlich spektralen Aufspalten, und mit einer ersten und einer zweiten einstellbaren Blende (53, 55), die Lichtanteile des unteren und des oberen Sperrbereichs blockieren, **dadurch gekennzeichnet, dass** die erste und die zweite Blende drehbare Exzenter sind.

2. Bandpassfilter (101) nach Anspruch 1, **dadurch gekennzeichnet, dass** das Mittel zum räumlich spektralen Aufspalten eine Aufspaltungsebene definiert und die erste und die zweite Blende in der Aufspaltungsebene drehbar sind.

3. Bandpassfilter (101) nach einem der Ansprüche 1 bis 2, **dadurch gekennzeichnet, dass** das Mittel zum räumlich spektralen Aufspalten eine Aufspaltungsebene definiert und die erste und die zweite Blende um zur Aufspaltungsebene parallele Achsen drehbar sind.

4. Scanmikroskop mit einer Lichtquelle zur Beleuchtung einer Probe, mit einem Detektor und mit einem Bandpassfilter (101) nach einem der Ansprüche 1 bis 3 .

5. Scanmikroskop nach Anspruch 4, **dadurch gekennzeichnet, dass** ein Fokussiermittel zum Fokussieren des Detektionslichtes vorgesehen ist.

6. Scanmikroskop nach einem der Ansprüche 4 oder 5, **dadurch gekennzeichnet, dass** das Mittel zum räumlich spektralen Aufspalten des Detektionslichtes ein Prisma, ein Gitter oder ein Hologramm beinhaltet.

7. Scanmikroskop nach einem der Ansprüche 4 bis 6, **dadurch gekennzeichnet, dass** zumindest ein Antriebsmittel zum Einstellen der ersten und der zweiten Blende vorgesehen sind.

8. Scanmikroskop nach Anspruch 7, **dadurch gekennzeichnet, dass** das Antriebsmittel einen Motor, einen Steppermotor, ein Galvanometer, einen Piezomotor oder ein Galvanometer beinhaltet.

9. Scanmikroskop nach einem der Ansprüche 7 oder 8, **dadurch gekennzeichnet, dass** das Antriebsmittel computergesteuert, insbesondere von einem PC gesteuert, ist.

10. Verfahren zur Scanmikroskopie, wobei eine Probe mit Beleuchtungslicht einer Lichtquelle beleuchtet wird und das von der Probe ausgehende Detektionslicht räumlich spektral aufgespalten wird, **gekennzeichnet durch** folgende Schritte:
• Auswählen einer unteren Grenzwellenlänge, die einen unteren Sperrbereich definiert
• Auswählen einer oberen Grenzwellenlänge, die einen oberen Sperrbereich definiert
• Einstellen des unteren Sperrbereichs mit einer ersten einstellbaren Blende, die die Lichtanteile des unteren Sperrbereichs blockiert,
• Einstellen des oberen Sperrbereichs mit einer zweiten einstellbaren Blende, die Lichtanteile des oberen Sperrbereichs blockiert, wobei die erste und die zweite Blende drehbare Exzenter sind, und
• Detektieren der nicht blockierten Lichtanteile des Detektionslichtes.

11. Verfahren nach Anspruch 10, **dadurch gekennzeichnet, dass** das Mittel zum räumlich spektralen Aufspalten des Detektionslichtes eine Aufspaltungsebene definiert und die erste und die zweite Blende in der Aufspaltungsebene drehbar sind.

12. Verfahren nach einem der Ansprüche 10 oder 11, **dadurch gekennzeichnet, dass** das Mittel zum räumlich spektralen Aufspalten des Detektionslichtes eine Aufspaltungsebene definiert und die erste und die zweite Blende um zur Aufspaltungsebene parallele Achsen drehbar sind.

## Claims

1. Bandpass filter (101) having means for selection of a lower cut-off wavelength, which defines the upper limit of a lower cut-off band, and for selection of an upper cut-off wavelength, which defines the lower limit of an upper cut-off band, having a means (105) for spatially spectral splitting, and having a first and a second variable shutter (53, 55), which block light components in the lower and in the upper cut-off band, **characterized in that** the first and the second shutters are eccentrics which can be rotated.

2. Bandpass filter (101) according to Claim 1, **characterized in that** the means for spatially spectral splitting defines a splitting plane, and the first and the second shutter can be rotated on the splitting plane.

3. Bandpass filter (101) according to one of Claims 1 or 2, **characterized in that** the means for spatially spectral splitting defines a splitting plane, and the first and the second shutter can be rotated about axes which are parallel to the splitting plane.

4. Scanning microscope having a light source for illumination of a sample, having a detector and having a bandpass filter (101) according to one of Claims 1 to 3.

5. Scanning microscope according to Claim 4, **characterized in that** a focusing means is provided for focusing of the detection light.

6. Scanning microscope according to one of Claims 4 or 5, **characterized in that** the means for spatially spectral splitting of the detection light includes a prism, a grating or a hologram.

7. Scanning microscope according to one of Claims 4 to 6, **characterized in that** at least one drive means is or are provided for adjustment of the first and of the second shutter.

8. Scanning microscope according to Claim 7, **characterized in that** the drive means includes a motor, a stepper motor, a galvanometer, a piezo motor or a galvanometer.

9. Scanning microscope according to one of Claims 7 or 8, **characterized in that** the drive means is computer-controlled, in particular by a PC.

10. Method for scanning microscopy, with a sample being illuminated by illumination light from a light source, and with the detection light originating from the sample being spatially spectrally split, **characterized by** the following steps:
• selection of a lower cut-off wavelength which defines a lower cut-off band,
• selection of an upper cut-off wavelength, which defines an upper cut-off band,
• adjustment of the lower cut-off band by means of a first variable shutter which blocks the light components in the lower cut-off band,
• adjustment of the upper cut-off band by means of a second variable shutter which blocks light components in the upper cut-off band, with the first and the second shutters being eccentrics which can be rotated, and
• detection of those light components of the detection light which have not been blocked.

11. Method according to Claim 10, **characterized in that** the means for spatially spectral splitting of the detection light defines a splitting plane, and the first and the second shutter can be rotated on the splitting plane.

12. Method according to one of Claims 10 or 11, **characterized in that** the means for spatially spectral splitting of the detection light defines a splitting plane, and the first and the second shutter can be rotated about axes which are parallel to the splitting plane.

## Revendications

1. Filtre passe-bande (101) comprenant des moyens pour sélectionner une longueur d'onde de limite inférieure qui définit la limité supérieure d'une bande éliminée inférieure et pour sélectionner une longueur d'onde de limite supérieure qui définit la limite inférieure d'une bande éliminée supérieure, des moyens (105) pour le dédoublement spectral spatial, et des premier et deuxième diaphragmes réglables (53, 55) qui bloquent des parts de lumière des bandes éliminées inférieure et supérieure, **caractérisé en ce que** les premier et deuxième diaphragmes sont des excentriques orientables.

2. Filtre passe-bande (101) selon la revendication 1, **caractérisé en ce que** les moyens de dédoublement spectral spatial définissent un plan de dédoublement et **en ce que** les premier et deuxième diaphragmes sont orientables dans le plan de dédoublement.

3. Filtre passe-bande (101) selon l'une quelconque des revendications 1 à 2, **caractérisé en ce que** les moyens de dédoublement spectral spatial définissent un plan de dédoublement et **en ce que** les premier et deuxième diaphragmes sont orientables autour d'axes parallèles au plan de dédoublement.

4. Microscope à balayage, comprenant une source de lumière pour éclairer un échantillon, avec un détecteur et un filtre passe-bande (101) selon l'une quelconque des revendications 1 à 3.

5. Microscope à balayage selon la revendication 4, **caractérisé en ce que** des moyens de focalisation pour focaliser la lumière de détection sont prévus.

6. Microscope à balayage selon l'une quelconque des revendications 4 ou 5, **caractérisé en ce que** les moyens de dédoublement spectral spatial de la lumière de détection comprennent un prisme, un réseau ou un hologramme.

7. Microscope à balayage selon l'une quelconque des revendications 4 à 6, **caractérisé en ce qu'**au moins un moyen d'entraînement pour régler les premier et deuxième diaphragmes est prévu.

8. Microscope à balayage selon la revendication 7, **caractérisé en ce que** les moyens d'entraînement comprennent un moteur, un moteur pas-à-pas, un galvanomètre, un moteur piézoélectrique ou un galvanomètre.

9. Microscope à balayage selon l'une quelconque des revendications 7 ou 8, **caractérisé en ce que** les moyens d'entraînement sont commandés par ordinateur, en particulier commandés par un ordinateur individuel.

10. Procédé de microscopie à balayage, dans lequel un échantillon est éclairé par une lumière d'éclairage d'une source de lumière et la lumière de détection émanant de l'échantillon est dédoublée de façon spectrale dans l'espace, **caractérisé par** les étapes suivantes consistant à :
- sélectionner une longueur d'onde de limite inférieure définissant une bande éliminée inférieure,
- sélectionner une longueur d'onde de limite supérieure définissant une bande éliminée supérieure,
- régler la bande éliminée inférieure à l'aide d'un premier diaphragme réglable bloquant les parts de lumière de la bande éliminée inférieure,
- régler la bande éliminée supérieure à l'aide d'un deuxième diaphragme réglable bloquant les parts de lumière de la bande éliminée supérieure, les premier et deuxième diaphragmes étant des excentriques orientables, et
- détecter les parts de lumière non bloquées de la lumière de détection.

11. Procédé selon la revendication 10, **caractérisé en ce que** les moyens de dédoublement spectral spatial de la lumière de détection définissent un plan de dédoublement et **en ce que** les premier et deuxième diaphragmes sont orientables dans le plan de dédoublement.

12. Procédé selon l'une quelconque des revendications 10 ou 11, **caractérisé en ce que** les moyens de dédoublement spectral spatial de la lumière de détection définissent un plan de dédoublement et **en ce que** les premier et deuxième diaphragmes sont orientables autour d'axes parallèles au plan de dédoublement.
